# EUROPEAN PATENT APPLICATION

(11) **EP 4 508 957 A1**
(43) Date of publication of application: **19.02.2025**
(21) Application number: 24195247.2
(22) Date of filing: 19.08.2024
(51) Int. Cl.: A01B 39/14, A01B 63/24, A01B 63/32, A01B 69/00, A01C 7/20

(54) **INTEGRATED ROW GUIDANCE SYSTEM**

(30) Priority: 17.08.2023 US 202363533289 P
(71) Applicant: Macdon Industries Ltd., Winnipeg, Manitoba R3J 3S3 (CA)
(72) Inventor: Flick, Daniel, Gooding,, 83330 (US); Hundt, Karl Bernard, Lake Mills, 53551 (US)
(74) Representative: Jostarndt Patentanwalts-AG

(57) **Abstract**

An agricultural implement mountable to a towing vehicle comprises a main mounting assembly, a toolbar slidably attached to the main mounting assembly, a plurality of row units mounted on the toolbar, a wand guidance system, and a control unit. The main mounting assembly is configured to be mountable to the towing vehicle. The wand guidance system is mounted on a selected one of the plurality of row units. The wand guidance system is configured to sense a position of the selected row unit relative to a first of a plurality of crop rows and generate a control signal based on the position of the selected row unit relative to the first crop row. The control unit is configured to adjust a lateral position of the toolbar relative to the main mounting assembly based on the control signal.

## Description

### BACKGROUND OF THE INVENTION

Cultivator technology is generally known, where row crop cultivators are often used to cultivate soil between rows of crops such as for weeding of an agricultural field. The row crop cultivator, or more simply cultivator, may include a lateral toolbar and a selected number of cutting devices that work the soil between rows in a manner that helps eliminate weeds. Known row crop cultivators of this type are pulled behind a traction unit, such as a tractor, and rely upon the skill of the operator to steer the tractor and thereby guide the implement between rows without damaging crops.

Implement guidance is often desired to ensure that the implement is properly tracking between the rows to reduce crop damage. Existing technology includes mechanical crop feelers, vision-based sensor systems, lidar-based systems, and others. All of these systems are designed to adjust the position of the implement (or its working elements) independently of the traction unit. Each of these types of sensing systems have their own advantages and disadvantages. Mechanical systems are often best suited for more mature crop conditions where vegetation can cause inaccuracies with vision, lidar, or other non-contact systems. One problem contact-based systems face is that they are unable to distinguish when the machine is entering point rows, headlands, and other non-parallel rows to the intended path in the field. In addition, contact-based systems are often close to the ground, and thus, are prone to mechanical damage.

Contact-based systems typically are mounted on the toolbar or the traction unit pulling the implement. Thus, these systems are vulnerable to damage and are not always accurate because the sensor is located in front of the row unit rather than where the working tool is located. Moreover, conventional contact-based systems require additional circuitry to disengage the system when the working element is disengaged.

### SUMMARY OF THE INVENTION

The present invention is directed to a mechanical feeler (or "wand") contact-based system (i.e., a wand guidance assembly) that is directly mounted to a working element or row unit of the implement. The wand guidance assembly thus senses crop exactly where the working elements are acting, which increases the reliability of the signal and reduces the chances of damage. The contact point of the wand is located at or behind the location where the implement first engages the crop or soil with the working elements of the implement. When the row unit is lifted out of the crop, the wand and wand guidance assembly are lifted as well. Accordingly, additional electronics are not required to turn the guidance system off.

According to one aspect of the invention, an agricultural implement mountable to a towing vehicle comprises a main mounting assembly, a toolbar slidably attached to the main mounting assembly, a plurality of row units mounted on the toolbar, a wand guidance system, and a control unit. The main mounting assembly is configured to be mountable to the towing vehicle. The wand guidance system is mounted on a selected one of the plurality of row units. The wand guidance system is configured to sense a position of the selected row unit relative to a first of a plurality of crop rows and generate a control signal based on the position of the selected row unit relative to the first crop row. The control unit is configured to adjust a lateral position of the toolbar relative to the main mounting assembly based on the control signal.

According to another aspect of the invention, an agricultural implement mountable to a towing vehicle comprises a main mounting assembly, a toolbar slidably attached to the main mounting assembly, a plurality of row units mounted on the toolbar, a wand guidance system, and a control unit. The main mounting assembly is configured to be mountable to the towing vehicle. The wand guidance system comprises a first sensor wand having a contact point. The contact point is adjacent to a selected one of the plurality of row units. The wand guidance system is configured to sense a position of the selected row unit relative to a first of a plurality of crop rows and generate a control signal based on the position of the selected row unit relative to the first crop row. The control unit is configured to adjust a lateral position of the toolbar relative to the main mounting assembly based on the control signal.

### BRIEF DESCRIPTION OF THE DRAWINGS

Advantages of the present invention will be readily appreciated as the same becomes better understood by reference to the following detailed description when considered in connection with the accompanying drawings wherein:
Figure 1 is a perspective front view of a row crop cultivator including a wand guidance assembly according to the present invention;
Figure 2 is a perspective front view of a row unit with the wand guidance assembly from the row crop cultivator of Figure 1;
Figure 3 is side view of the row unit with the wand guidance assembly of Figure 2;
Figure 4 is top view of the row unit with the wand guidance assembly of Figure 2;

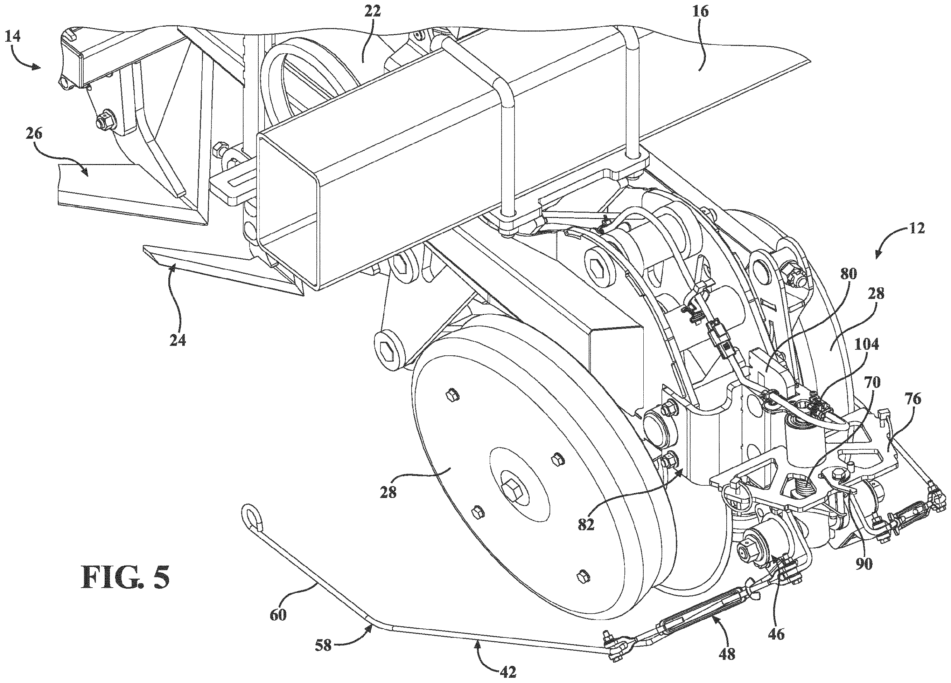

Figure 5 is fragmentary perspective view of the row unit with the wand guidance assembly of Figure 2 with the crop deflector removed;
Figure 6 is perspective view of the wand guidance assembly according to the present invention with the crop deflector removed;
Figure 7 is a side view of the wand guidance assembly of Figure 6;
Figure 8 is a cross-sectional view of the wand guidance assembly of Figure 7 taken along section line A-A;
Figure 9 is a fragmentary top view of the proximal portion of the wand assembly from the wand guidance assembly according to the present invention;
Figure 10 is a top view of the wand assembly from the wand guidance assembly according to the present invention;
Figure 11 is a fragmentary top view of the centering spring on the wand guidance assembly according to the present invention;
Figure 12 is a fragmentary perspective view of the center position adjuster on the wand guidance assembly according to the present invention;
Figure 13 is a top view of the wand guidance assembly with a fragmentary top view showing the center position adjuster at true center;
Figure 14 is a top view of the wand guidance assembly with a fragmentary top view showing the center position adjuster when it is clockwise bias-centered;
Figure 15 is a fragmentary perspective view of the wand guidance assembly mounted on a row unit;
Figure 16 is a fragmentary perspective view of the wand guidance assembly showing the components of wand guidance assembly behind the crop deflector;
Figure 17 is a top view of the wand guidance assembly on the cultivator of Figure 1 with the row units centered between row crops;
Figure 18 is a top view of the wand guidance assembly on the cultivator of Figure 1 with the row units not centered between rows crops;
Figure 19 is a fragmentary top view of the wand guidance assembly showing the centering spring with the wand pivot centered;
Figure 20 is a fragmentary top view of the wand guidance assembly showing the centering spring with the wand pivoted clockwise; and
Figure 21 is a fragmentary top view of the wand guidance assembly showing the centering spring with the wand pivoted counterclockwise.

### DETAILED DESCRIPTION OF EXAMPLE EMBODIMENTS

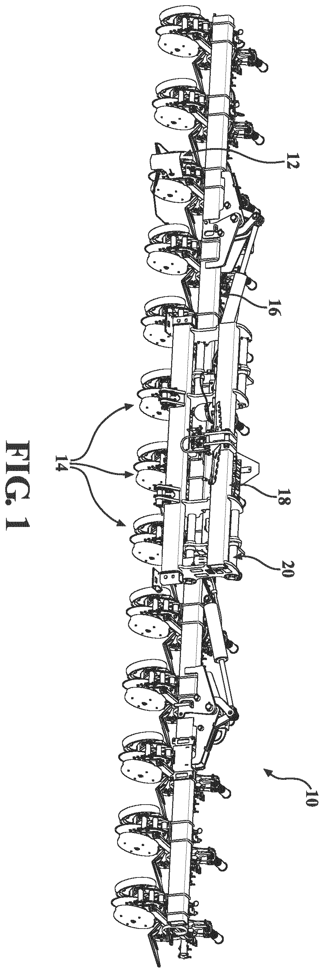

Figure 1 illustrates one embodiment of a row crop cultivator 10 that includes a wand guidance assembly 12 according to the present invention. Directional references employed or shown in the description, figures, or claims, such as top, bottom, upper, lower, upward, downward, lengthwise, widthwise, left, right, and the like, are relative terms employed for ease of description and are not intended to limit the scope of the invention in any respect.

The row crop cultivator 10 includes a plurality of row units 14 mounted on a laterally-shiftable toolbar 16. The row units 14 are laterally spaced to work the soil or ground in the spaces between crop rows. The wand guidance assembly 12 senses the two crop rows adjacent to the row unit 14 that it is mounted on and sends a signal to shift the toolbar 16 laterally to stay positioned centered between the rows. Alternatively, the wand guidance assembly 12 may be configured over the top of a row to sense a single crop row. Although depicted with one wand guidance assembly 12 on the row crop cultivator 10, those having ordinary skill in the art will appreciate that more than one wand guidance assembly 12 may be mounted on the cultivator 10 without departing from the scope of the present invention.

The toolbar 16 may be releasably attached to a 3-point hitch of a towing vehicle, such as a tractor, by a main mounting assembly 18. Four slide rails 20 attach the toolbar 16 to the main mounting assembly 18 and allow the toolbar 16 to slide laterally relative to the main mounting assembly 18 and tractor when actuated by a hydraulic cylinder. Additional details regarding the crop row cultivator 10 may be found in U.S. Publication No. 2023/0115920, the contents of which are incorporated herein by reference.

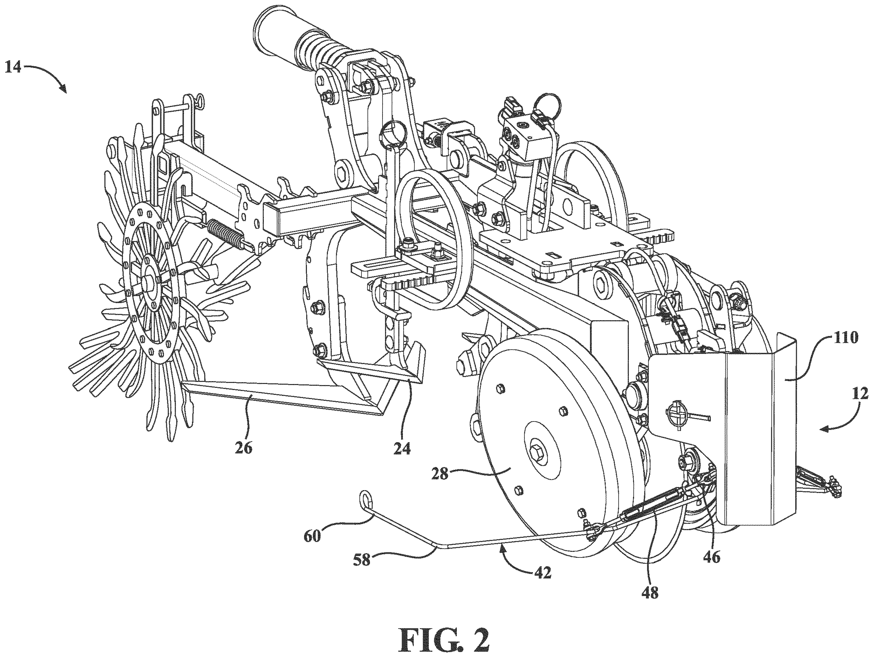

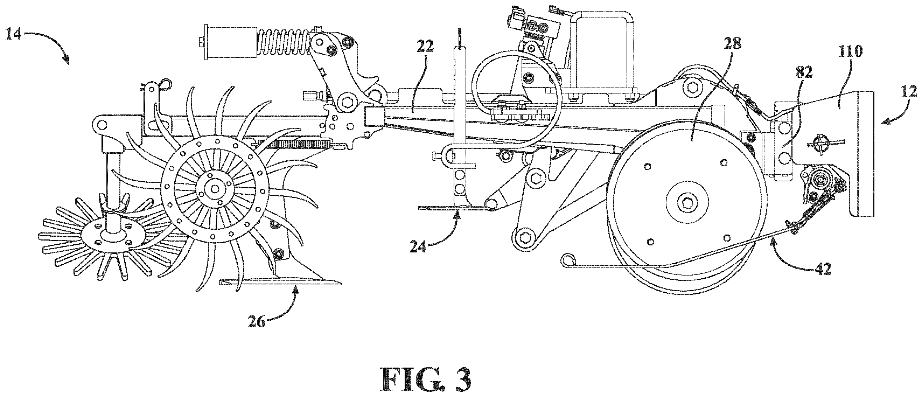

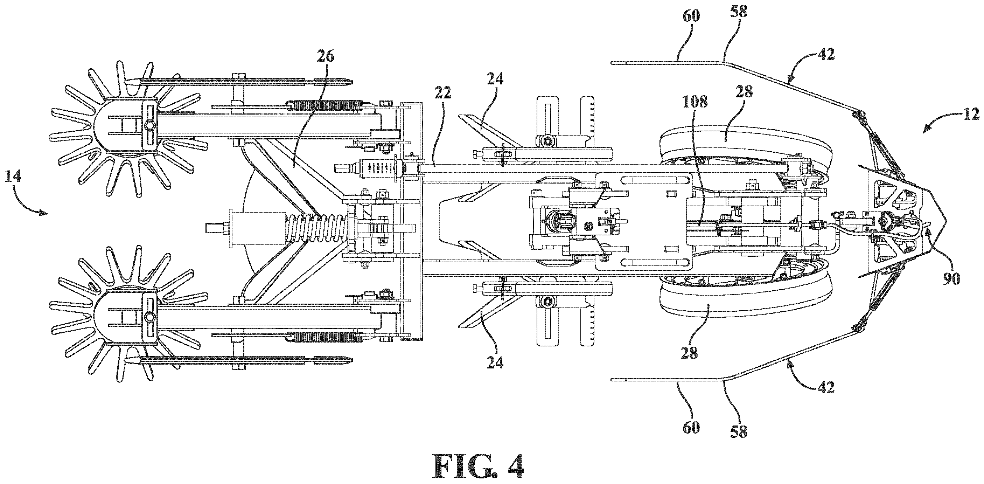

Referring to Figures 2-4, the row unit 14 includes a frame 22, two front sweeps 24 attached to the frame 22, and a rear sweep 26 attached to the frame 22. The rear sweep 26 is positioned rearwardly and between the two front sweeps 24. The row unit 14 also includes a pair of gauge wheels 28 attached to the front of the frame 22. The height of the gauge wheels 28 may be adjusted to vary the depth of penetration of the front and rear sweeps 24, 26 during cultivation.

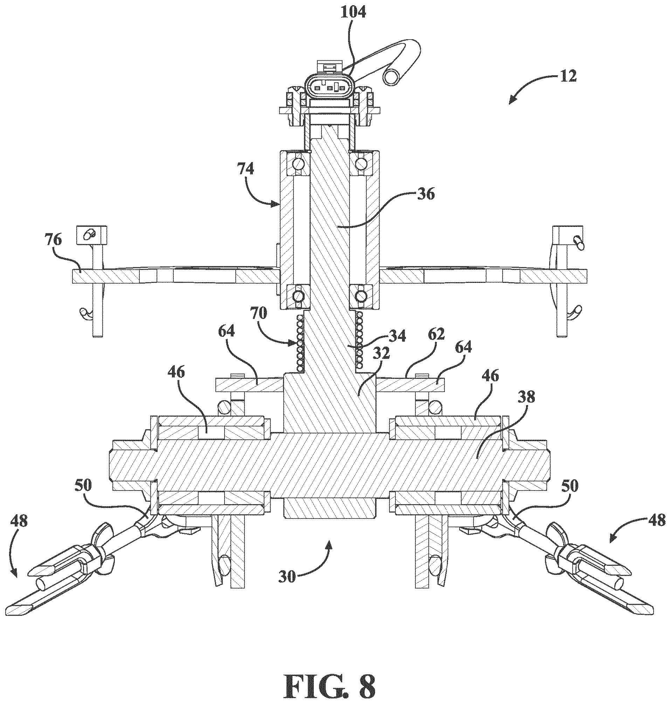

Referring to Figure 8, the wand guidance assembly 12 includes a vertical shaft 30 having three sections with varying diameters to support multiple components of the wand guidance assembly 12. The lower section 32 of the vertical shaft 30 has a wider diameter than the middle section 34, which has a wider diameter than the upper section 36. A horizontal shaft 38 is fixedly connected to each side of the lower section 32 of the vertical shaft 30.

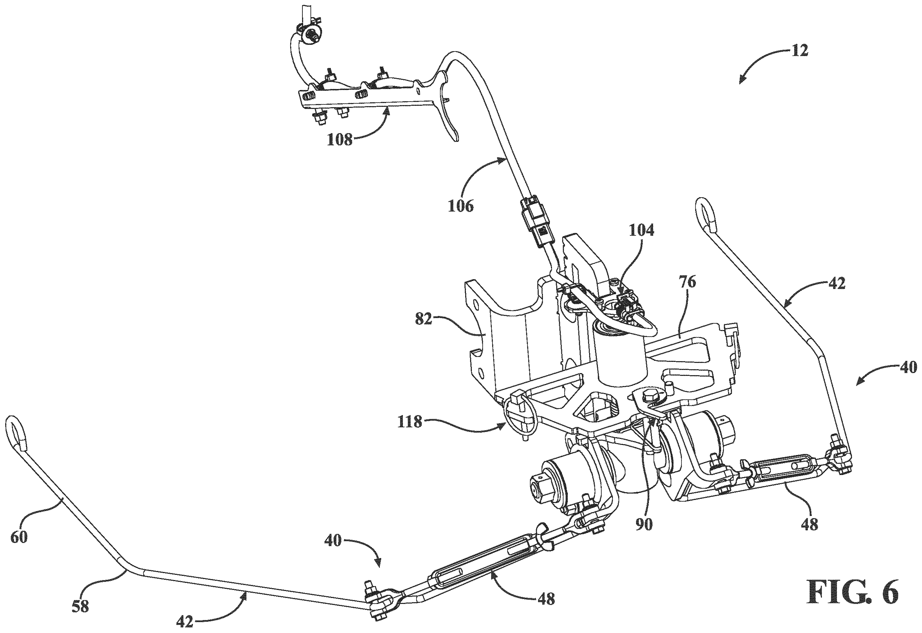

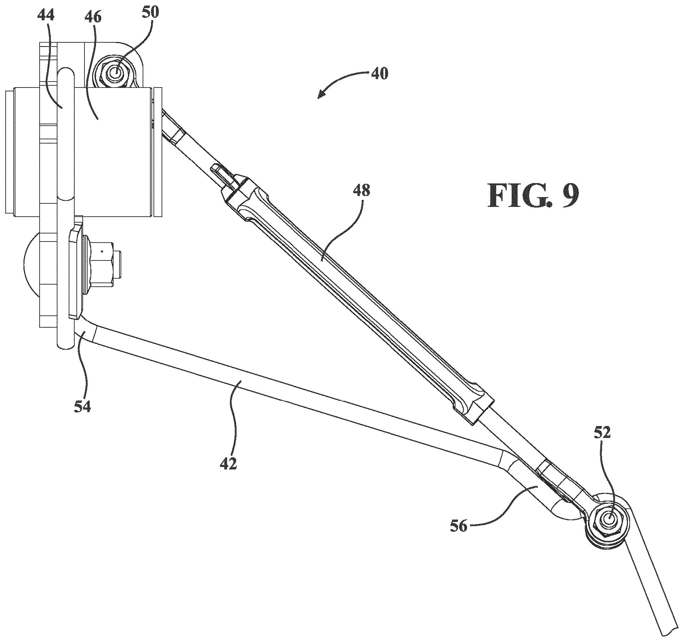

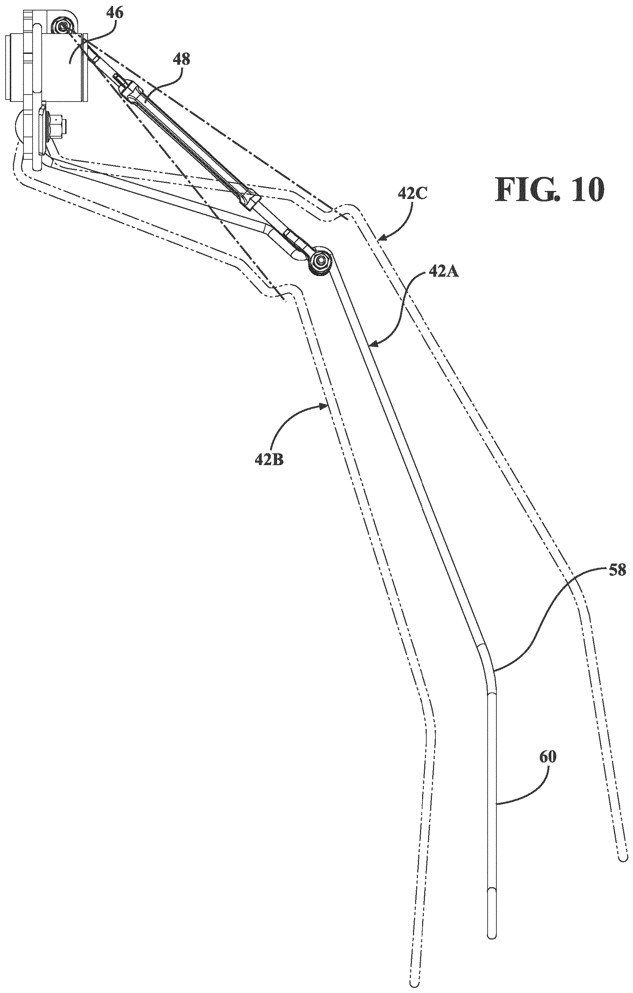

Referring to Figures 6-10, the wand guidance assembly 12 includes a pair of wand assemblies 40 rotatably connected to a respective horizontal shaft 38 by a wand mount bracket 46. The wand assemblies 40 are used to mechanically and selectively engage or "feel" the crop. Each wand assembly 40 includes a wand 42 having a proximal end 44 fixedly mounted to a wand mount bracket 46 and a turnbuckle 48 configured to adjust the width of the wands 42 when mounted on the row unit 14. Referring to Figures 9-10, the proximal end 50 of the turnbuckle 48 is pivotally coupled to the wand mount bracket 46, while the distal end 52 of the turnbuckle 48 is pivotally coupled to the wand 42. The wand 42 includes a proximal bend 54 between the proximal end 50 of the turnbuckle 48 and the distal end 52 of the turnbuckle 48, pivot bends 56 to pivotally couple with the distal end 52 of the turnbuckle 48, and a distal bend 58 to ensure that the distal portion 60 of the wand 42 is parallel to the row when cultivating crop. The proximal bend 54 is approximately 90°. Referring to Figure 10, 42A reflects the wand 42 in its unflexed position. Extending the turnbuckle 48 increases the proximal bend 54 in the wand 42 to narrow the width of the wands 42, as reflected at 42B, and retracting the turnbuckle 48 decreases the proximal bend 54 in the wand 42 to widen the width of the wands 42 as reflected at 42C. The wand mount bracket 46 allows the wands 42 to independently rotate about the shaft 38 to follow contouring ground conditions.

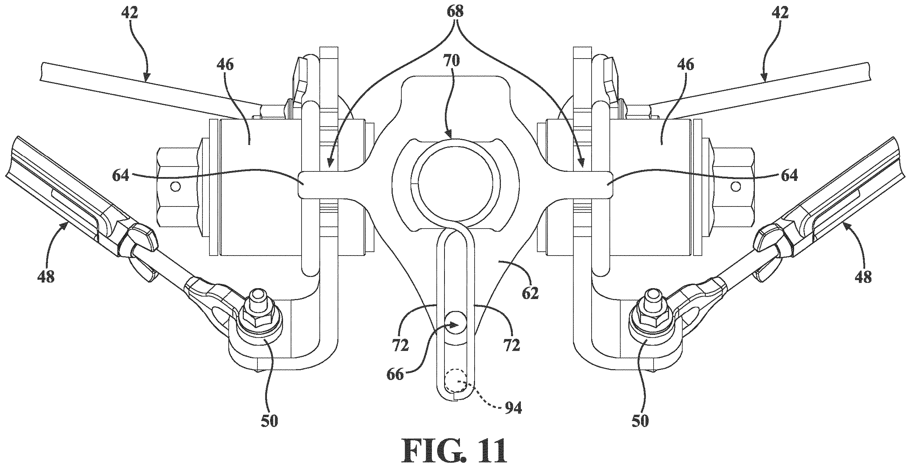

Referring to Figures 8 and 11, a spring mounting surface 62 extends from the lower section 32 of the vertical shaft 30 above the horizontal shafts 38. The spring mounting surface 62 includes a pair of tabs 64 extending from each side of the vertical shaft 30. A spring pin 66 is fixedly mounted on the front end of the spring mounting surface 62. The tabs 64 extend into notches 68 on the top of the wand mount bracket 46 to limit the rotation of the wand mount bracket 46 on the horizontal shaft 38.

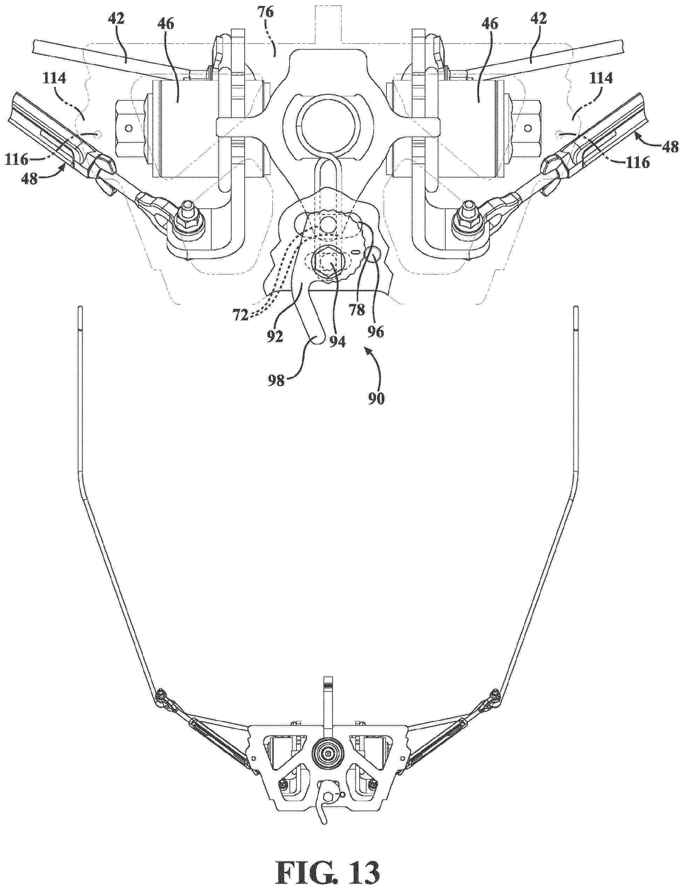

A centering spring 70 extends around the vertical shaft 30 above the spring mounting surface 62. The centering spring 70 is configured to fit around the middle section 34 of the vertical shaft 30 and abuts against the lower section 32 of the vertical shaft 30. Referring to Figures 11-14, the spring pin 66 on the spring mounting surface 62 extends between the ends 72 of the centering spring 70. The centering spring 70 preferably comprises a torsion spring.

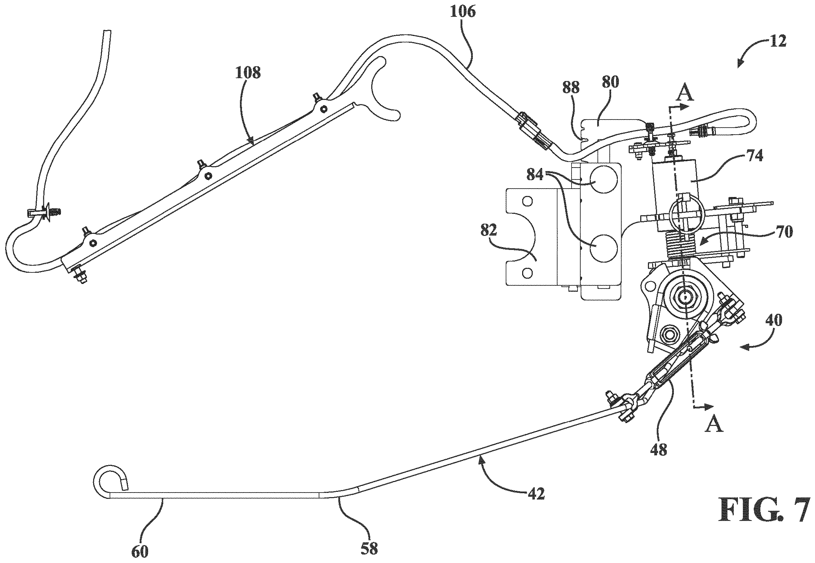

Referring to Figures 7-8, a cylindrical housing 74 is rotatably mounted on the upper section 36 of the vertical shaft 30 above the centering spring 70. The cylindrical housing 74 abuts against the middle section 34 of the vertical shaft 30. A horizontal mounting plate 76 is fixedly mounted to the exterior surface of the housing 74, and includes a slot 78 through which the spring pin 66 extends.

Referring to Figure 7, a vertical guidance bracket 80 is fixedly mounted to the rear of the cylindrical housing 74. An assembly mounting bracket 82 is configured to releasably mount the vertical guidance bracket 80 to the front of the row unit 14. Fasteners 84 between the assembly mounting bracket 82 and the vertical guidance bracket 80 are configured to slide within a slot 86 in the vertical guidance bracket 80 to adjust the height of the wand guidance assembly 12 in relation to the row unit 14. Notches 88 in the vertical guidance bracket 80 are configured to align with settings on the gauge wheel bracket to ensure that the height of the wand guidance assembly 12 is the same as the height of the row unit gauge wheels 28 so that the distal portion 60 of the wand 42 runs tangent to the ground surface.

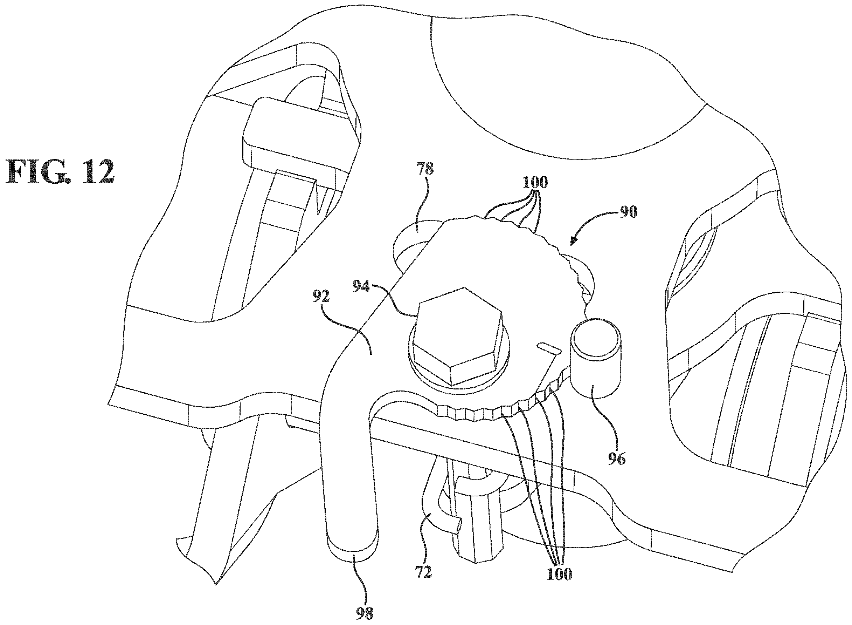

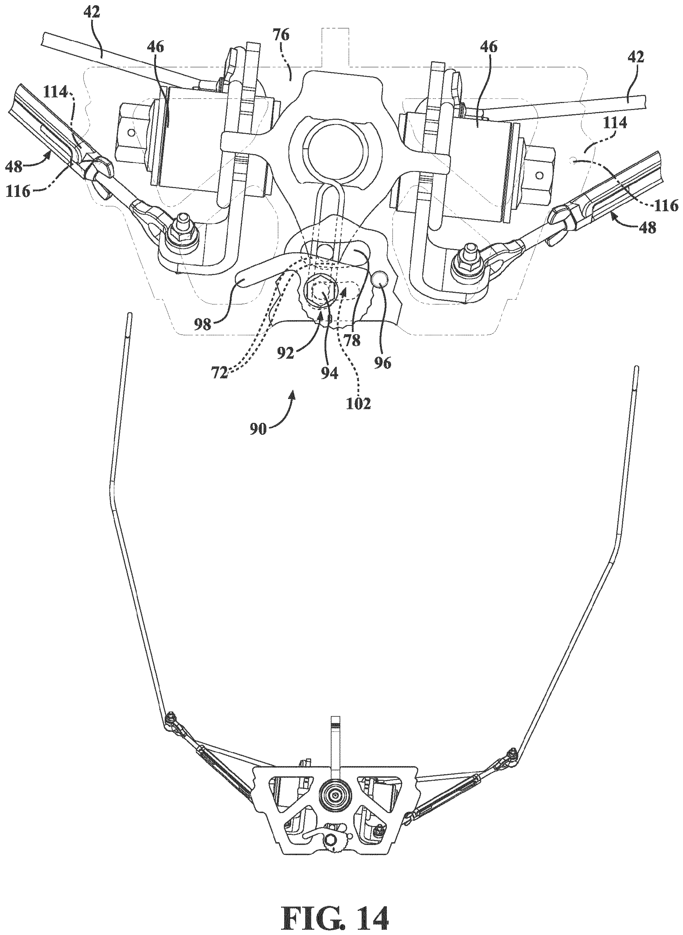

Referring to Figures 12-14, a center position adjuster 90 is mounted on the horizontal mounting plate 76. The center position adjuster 90 is used to adjust the neutral position of the centering spring 70 to account for center errors. The center position adjuster 90 includes a centering snail cam 92, an adjustable centering bolt 94 and a reference dowel 96 extending from the top of the horizontal mounting plate 76. The centering snail cam 92 includes a lever 98 and a plurality of notches 100 along the cam surface. Referring to Figures 11-15, the centering bolt 94 extends through the centering snail cam 92 and through a slot 102 in the horizontal mounting plate 76. The bottom of the bolt 94 extends between the ends 72 of the centering spring 70 in front of the spring pin 66. To adjust the neutral position of the centering spring 70, the bolt 94 on the center position adjuster 90 can be loosened, and the lever 98 can be used to rotate the cam 92 and move the bolt 94 along the slot 102. Rotating the cam 92 from one notch 100 to the next will move the center position of the wand guidance assembly 12 a small distance, e.g., approximately 0.5 inches. Thus, the cam 92 can rotate incrementally as the notches 100 around the cam surface engage the reference dowel 96. As reflected in Figures 14-15, rotating the bolt 94 along the slot 102 will rotate the centering spring 70, which rotates the spring pin 66 on the vertical shaft 30, thereby causing the entire wand guidance assembly 12 to rotate. After the wand guidance assembly 12 is properly centered, the bolt 94 on the center position adjuster 90 can be tightened to fix the wand guidance assembly 12 in place.

Referring to Figures 6-8, a rotary position sensor 104 is mounted on top of the vertical shaft 30 to sense the rotational position of the vertical shaft 30. The rotational position of the vertical shaft 30 is transmitted through a wire harness 106 to a control unit, which adjusts the lateral position of the toolbar 16 to ensure that the row units 14 remain centered between the crop rows. A wand harness bracket 108 stabilizes the wire harness 106 and mounts it to the row unit 14.

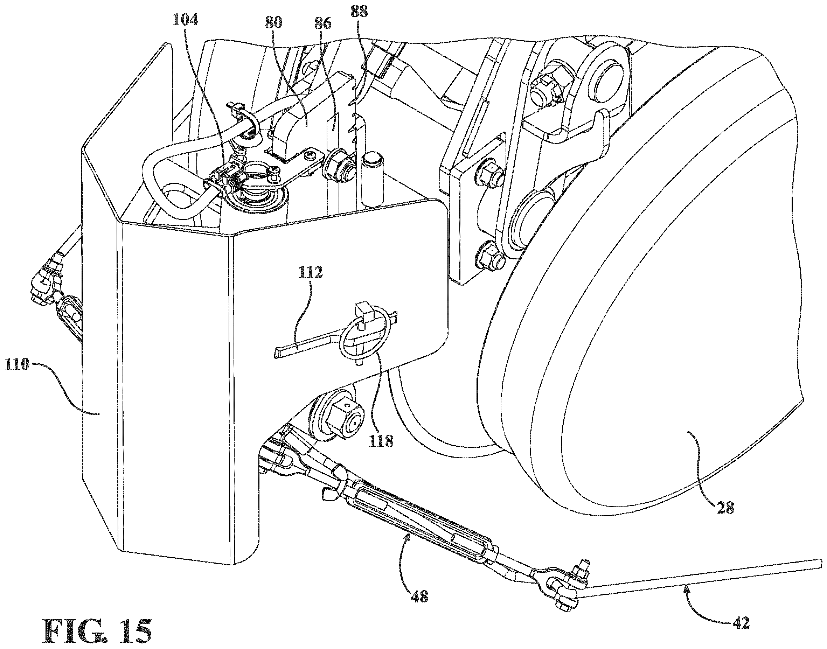

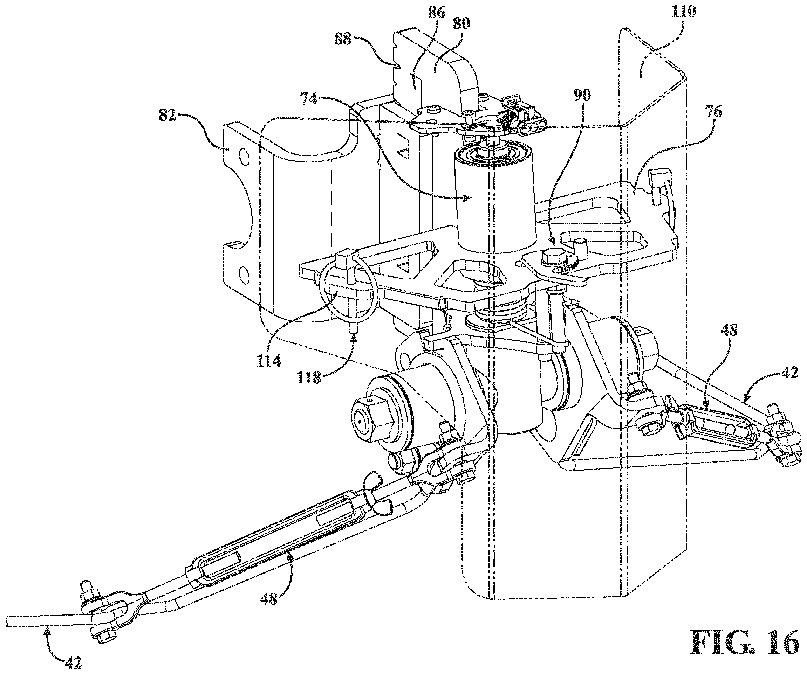

Referring to Figures 15-16, a crop deflector 110 is mounted to the front of the horizontal mounting plate 76. The crop deflector 110 protects the components of the wand guidance assembly 12, and prevents dirt and debris from reaching the components of the wand guidance assembly 12. Tabs 114 on the periphery of the horizontal mounting plate 76 extend through slots 112 on the crop deflector 110, and lynch pins 118 are inserted into holes 116 on the tabs 114 to mount the crop deflector 110 onto the horizontal mounting plate 76.

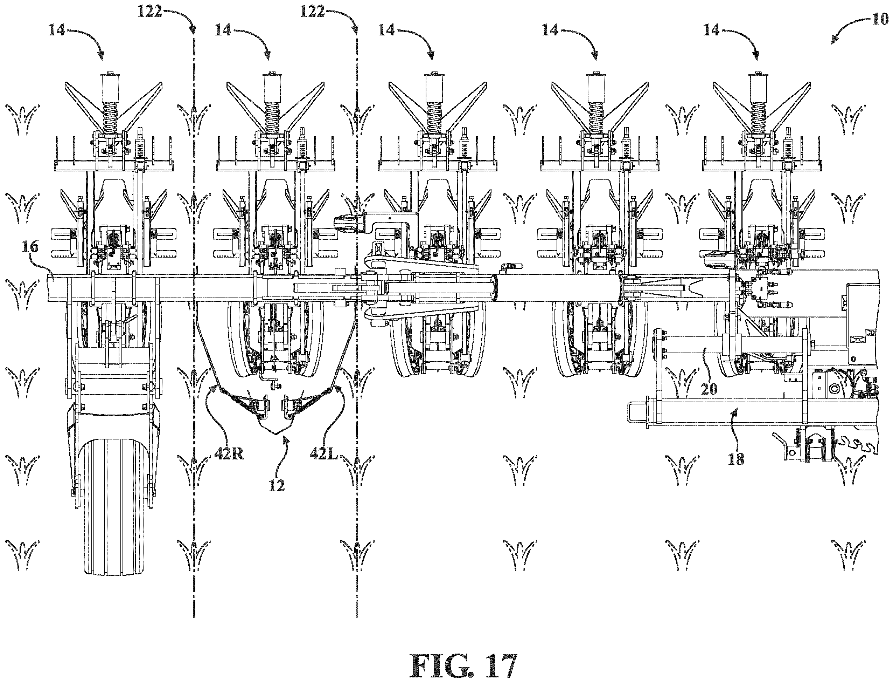

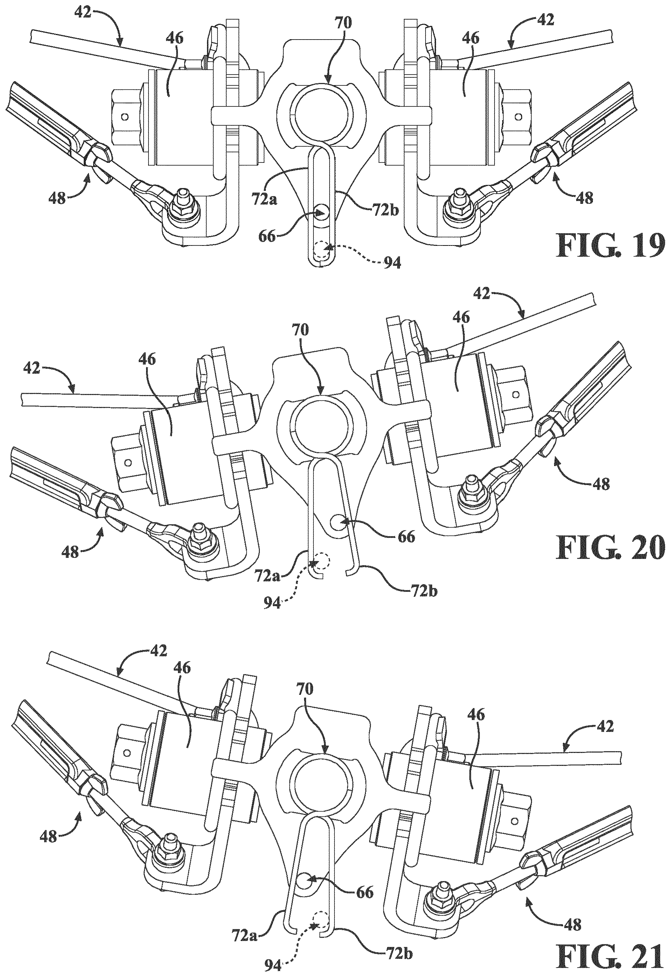

Figures 17-21 illustrate the wand guidance assembly 12 in operation. Referring to Figures 17-18, as the cultivator 10 is being pulled through rows of crop, the wands 42R, 42L on the wand guidance assembly 12 sense the two crop rows 122 adjacent to the row unit 14 with the wand guidance assembly 12 mounted on it. As reflected in the Figures, the contact point of the sensor wands 42R, 42L is adjacent to the row unit 14 so that the contact point is located at or behind the location where the row unit 14 first engages the crop 122. If the row units 14 are centered between the crop rows 122, as reflected in Figure 17, the wand guidance assembly 12 remains centered with the centering spring 70 in the unbiased position, as reflected in Figure 19.

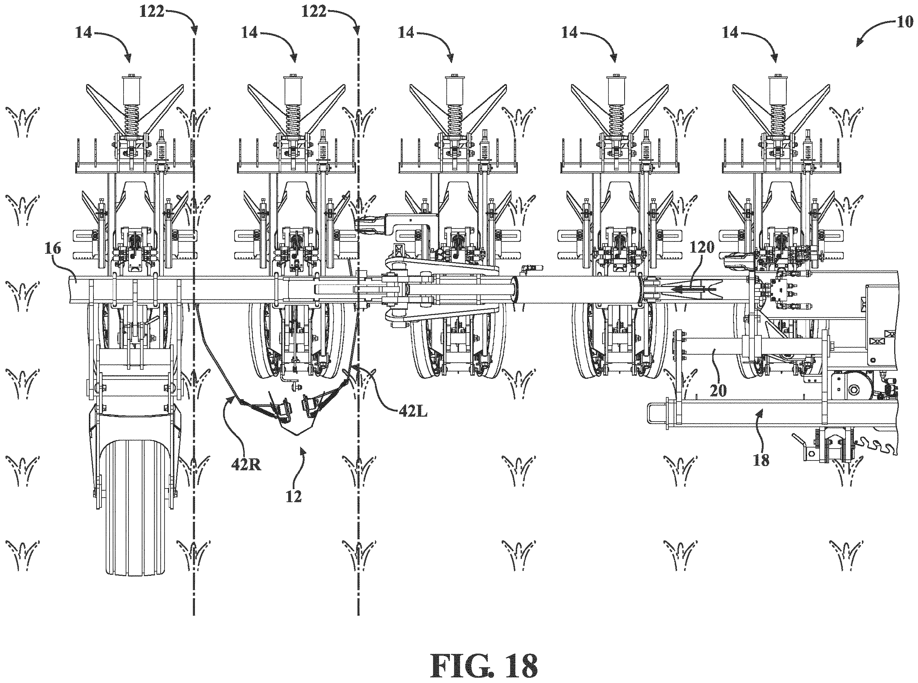

If the row units 14 drift off center, e.g., if the row units 14 drift to the left as reflected in Figure 18, the left wand 42L will engage the crop row 122, causing the wand guidance assembly 12 to rotate counterclockwise. The rotary position sensor 104 will sense the rotational position of the vertical shaft 30 and send a signal to shift the toolbar 16 laterally to the right, i.e., in the direction of arrow 120. The toolbar 16 will continue shifting to the right until the row unit 14 is recentered between the crop rows 122.

When the wand guidance assembly 12 rotates counterclockwise, the spring pin 66 will actuate centering spring 70 by pulling the end 72b away from its neutral position, as reflected in Figure 20. By contrast, when the wand guidance assembly 12 rotates clockwise, the spring pin 66 will actuate centering spring 70 by pulling the end 72a away from its neutral position, as reflected in Figure 21.

When the operator raises the row units 14, e.g., at the end of a row to turn, the centering spring 70 biases spring pin 66 to align with the centering bolt 94, as reflected in Figure 19, which biases the wand guidance assembly 12 into the center position. Because the wand guidance assembly 12 returns to the center position, no signal is sent to the control unit to adjust the positioning of the toolbar 16. Thus, with the present invention, no additional signal needs to be sent to the wand guidance assembly 12 to turn off the sensing system. Accordingly, with the present invention, when the row unit 14 is inactive, the wand guidance assembly 12 also is inactive.

The invention has been described in an illustrative manner, and it is to be understood that the terminology, which has been used, is intended to be in the nature of words of description rather than of limitation. Many modifications and variations of the present invention are possible in light of the above teachings. It is, therefore, to be understood that within the scope of the appended claims, the invention may be practiced other than as specifically described.

## Claims

1. An agricultural implement mountable to a towing vehicle, the agricultural implement comprising:
a main mounting assembly configured to be mountable to the towing vehicle;
a toolbar slidably attached to the main mounting assembly;
a plurality of row units mounted on the toolbar;
a wand guidance system mounted on a selected one of the plurality of row units, wherein the wand guidance system is configured to sense a position of the selected row unit relative to a first of a plurality of crop rows and generate a control signal based on the position of the selected row unit relative to the first crop row; and
a control unit configured to adjust a lateral position of the toolbar relative to the main mounting assembly based on the control signal.

2. The agricultural implement of claim 1, wherein the wand guidance system comprises a first sensor wand configured to engage the first crop row when the selected row unit is not in a preferred position relative to the first crop row.

3. The agricultural implement of claim 2, wherein the selected row unit is in the preferred position when it is centered between the first crop row and a second one of the plurality of crop rows adjacent the first crop row.

4. The agricultural implement of claim 3, wherein the wand guidance system further comprises a second sensor wand configured to engage the second crop row when the selected row unit is not in a second preferred position relative to the adjacent crop row.

5. The agricultural implement of claim 4, wherein the selected row unit is in the second preferred position when it is centered between the first crop row and the second crop row.

6. The agricultural implement of claim 2, wherein the wand guidance system further comprises a centering spring configured to bias the first sensor wand into a neutral position, wherein the first sensor wand is in the neutral position when the selected row unit is in the preferred position relative to the first crop row.

7. The agricultural implement of claim 2, wherein the wand guidance system further comprises a position sensor configured to sense a rotational position of the first sensor wand relative to the selected row unit.

8. The agricultural implement of claim 7, wherein the position sensor generates the control signal to adjust the lateral position of the toolbar.

9. The agricultural implement of claim 2, wherein the wand guidance system further comprises a turnbuckle configured to adjust the width of the first sensor wand.

10. The agricultural implement of claim 1, wherein the wand guidance system further comprises a crop deflector mounted between the wand guidance system and the towing vehicle.

11. An agricultural implement mountable to a towing vehicle, the agricultural implement comprising:
a main mounting assembly configured to be mountable to the towing vehicle;
a toolbar slidably attached to the main mounting assembly;
a plurality of row units mounted on the toolbar;
a wand guidance system comprising a first sensor wand having a contact point, wherein the contact point is adjacent to a selected one of the plurality of row units, wherein the wand guidance system is configured to sense a position of the selected row unit relative to a first of a plurality of crop rows and generate a control signal based on the position of the selected row unit relative to the first crop row; and
a control unit configured to adjust a lateral position of the toolbar relative to the main mounting assembly based on the control signal.

12. The agricultural implement of claim 11, wherein the first sensor wand is configured to engage the first crop row when the selected row unit is not in a preferred position relative to the first crop row.

13. The agricultural implement of claim 12, wherein the selected row unit is in the preferred position when it is centered between the first crop row and a second one of the plurality of crop rows adjacent the first crop row.

14. The agricultural implement of claim 13, wherein the wand guidance system further comprises a second sensor wand configured to engage the second crop row when the selected row unit is not in a second preferred position relative to the adjacent crop row.

15. The agricultural implement of claim 14, wherein the selected row unit is in the second preferred position when it is centered between the first crop row and the second crop row.

16. The agricultural implement of claim 12, wherein the wand guidance system further comprises a centering spring configured to bias the first sensor wand into a neutral position, wherein the first sensor wand is in the neutral position when the selected row unit is in the preferred position relative to the first crop row.

17. The agricultural implement of claim 12, wherein the wand guidance system further comprises a position sensor configured to sense a rotational position of the first sensor wand relative to the selected row unit.

18. The agricultural implement of claim 17, wherein the position sensor generates the control signal to adjust the lateral position of the toolbar.

19. The agricultural implement of claim 12, wherein the wand guidance system further comprises a turnbuckle configured to adjust the width of the first sensor wand.

20. The agricultural implement of claim 11, wherein the wand guidance system further comprises a crop deflector mounted between the wand guidance system and the towing vehicle.
